# EUROPEAN PATENT APPLICATION

(11) **EP 4 645 504 A1**
(43) Date of publication of application: **05.11.2025**
(21) Application number: 22970140.4
(22) Date of filing: 28.12.2022
(51) Int. Cl.: H01M 10/058, H01M 4/139, H01M 4/62, H01M 10/052

(54) **MANUFACTURING METHOD FOR SECONDARY BATTERY**

(71) Applicant: Kyocera Corporation, Kyoto-shi, Kyoto 612-8501 (JP)
(72) Inventor: TODOKI, Hitomi, Kyoto-shi, Kyoto 612-8501 (JP); FUKUMITSU, Hitoshi, Kyoto-shi, Kyoto 612-8501 (JP); UMESATO, Kazumasa, Kyoto-shi, Kyoto 612-8501 (JP); OGAWA, Ryohei, Kyoto-shi, Kyoto 612-8501 (JP)
(74) Representative: TBK
(86) International application number: PCT/JP2022/048479
(87) International publication number: WO 2024/142352

(57) **Abstract**

A manufacturing method for improving the performance of a secondary battery is realized. The manufacturing method includes: forming a negative electrode containing a negative electrode active material and a first electrolytic solution; forming a positive electrode containing a positive electrode active material and a second electrolytic solution; forming a cell in which a separator is located between the negative electrode and the positive electrode; and performing preliminary charging on the cell. A composition ratio of components contained in the first electrolytic solution and a composition ratio of components contained in the second electrolytic solution are different from each other.

## Description

### TECHNICAL FIELD

The present disclosure relates to a manufacturing method for a secondary battery.

### BACKGROUND OF INVENTION

Patent Document 1 discloses a power storage device including a positive electrode containing a positive electrode active material, a negative electrode containing a negative electrode active material, a first nonaqueous electrolytic solution in contact with the positive electrode active material, a second nonaqueous electrolytic solution in contact with the negative electrode active material, and a solid electrolyte membrane. In the power storage device, the first nonaqueous electrolytic solution and the second nonaqueous electrolytic solution are separated from each other by the solid electrolyte membrane. The composition of the first nonaqueous electrolytic solution and the composition of the second nonaqueous electrolytic solution are different from each other.

### CITATION LIST

### PATENT LITERATURE

Patent Document 1: JP 2020-21677 A

### SUMMARY

A manufacturing method for a secondary battery according an aspect of the present disclosure includes forming a negative electrode containing a negative electrode active material and a first electrolytic solution; forming a positive electrode containing a positive electrode active material and a second electrolytic solution; forming a cell in which a separator permeable to the first electrolytic solution and the second electrolytic solution is located between the negative electrode and the positive electrode; and performing preliminary charging on the cell, in which a composition ratio of components contained in the first electrolytic solution and a composition ratio of components contained in the second electrolytic solution are different from each other.

A manufacturing method for a secondary battery according to another aspect of the present disclosure includes forming a cell in which a separator permeable to a first electrolytic solution and a second electrolytic solution is located between a negative electrode containing a negative electrode active material and a positive electrode containing a positive electrode active material; injecting the first electrolytic solution into the negative electrode; injecting the second electrolytic solution into the positive electrode; and performing preliminary charging on the cell, in which a composition ratio of components contained in the first electrolytic solution and a composition ratio of components contained in the second electrolytic solution are different from each other.

### BRIEF DESCRIPTION OF THE DRAWINGS

FIG. 1 is a perspective view illustrating an appearance of a secondary battery according to the present disclosure.
FIG. 2 is a perspective view illustrating an appearance of a cell according to the present disclosure.
FIG. 3 is an exploded model view illustrating a cross section taken along line III-III of FIG. 1.
FIG. 4 is an exploded model view illustrating a cross section taken along line IV-IV of FIG. 1.
FIG. 5 is a cross-sectional view illustrating a specific structure of an electrode body.
FIG. 6 is a flowchart illustrating a manufacturing method for a secondary battery according to a first embodiment of the present disclosure.
FIG. 7 is a schematic view illustrating a manufacturing method for a secondary battery according to a second embodiment of the present disclosure.

### DESCRIPTION OF EMBODIMENTS

### First Embodiment

### Configuration of Secondary Battery

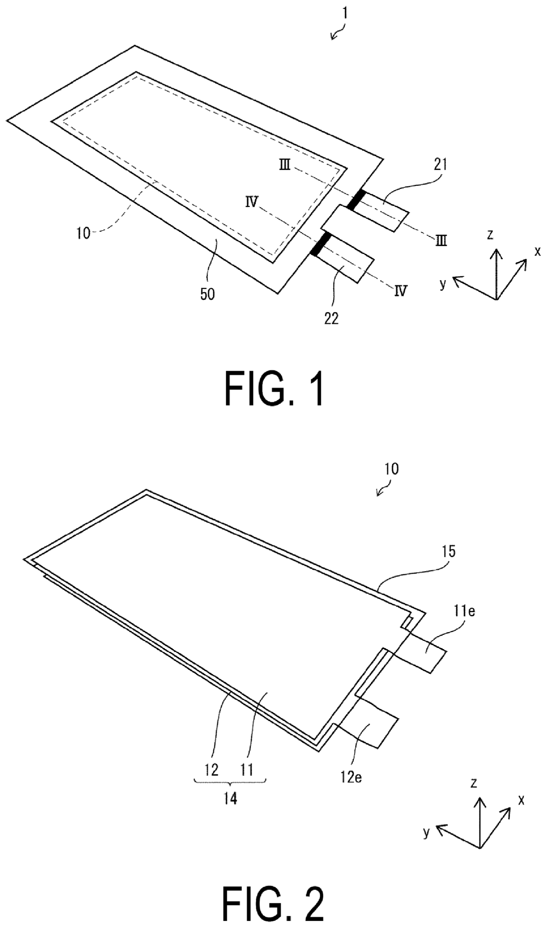

FIG. 1 is a perspective view illustrating an appearance of a secondary battery 1. The secondary battery 1 is a cell that can be charged or discharged by being electrically connected to an external terminal. For example, at least one secondary battery 1 may be mounted on a power storage device for houses, base stations, vehicles, robots such as drones, or medical devices. The secondary battery 1 may include a cell 10, connection terminals 21 and 22, and a second housing body 50. The configuration of the cell 10 will be described later.

The second housing body 50 may house the cell 10. The second housing body 50 may be made of, for example, an aluminum pouch film or a laminate film having a metal foil layer of stainless steel, nickel, or the like. The aluminum pouch film may be a film on which aluminum is vapor-deposited, or a laminate of an aluminum foil and a film. The material of the film may be, for example, polypropylene, polyethylene, nylon, or polyethylene terephthalate. The second housing body 50 may have a thickness from 50 µm to 300 µm; for example, a thickness of 200 µm.

When the second housing body 50 is an aluminum pouch film, the second housing body 50 may have a configuration in which two aluminum pouch films are located on both sides in the layering direction (Z-axis direction) of the cell 10. When the second housing body 50 is an aluminum pouch film, the second housing body 50 may have a configuration in which one aluminum pouch film is folded in two and the cell 10 is located therein.

The connection terminals 21 and 22 may be terminals connected to the external terminal in order to take out electric power from the secondary battery 1 or supply electric power to the secondary battery 1. The connection terminals 21 and 22 may protrude from the inside to the outside of the second housing body 50. The material of the connection terminals 21 and 22 may be, for example, copper, aluminum, or nickel. Each of the connection terminals 21 and 22 may have a thickness from 50 µm to 500 µm; for example, a thickness of 200 µm. The connection terminals 21 and 22 may be subjected to a surface treatment for improving adhesion to an adhesive member (not illustrated). The adhesive member adheres the connection terminals 21 and 22 to the second housing body 50 located above and below the connection terminals 21 and 22, in order to determine the positions of the connection terminals 21 and 22 with respect to the second housing body 50.

FIG. 2 is a perspective view illustrating an appearance of the cell 10. As illustrated in FIG. 2, the cell 10 may include an electrode body 14 and a first housing body 15. The electrode body 14 may have a sheet-like shape. The electrode body 14 having a sheet-like shape may include a negative electrode 11 and a positive electrode 12.

The first housing body 15 may house the electrode body 14. When a plurality of first housing bodies 15 each housing the electrode body 14 are layered, the plurality of first housing bodies 15 may be adhered to each other by an adhesive layer (not illustrated). The material of the first housing body 15 may be, for example, film-shaped polyethylene terephthalate (PET) or nylon. More specifically, for example, two first housing bodies 15 may be located on both sides in the layering direction (Z-axis direction) of the cell 10. A base material of the first housing body 15 may have a thickness, for example, from 10 µm to 40 µm; for example, a thickness of 25 µm. The material of the adhesive layer may be, for example, polypropylene or polyethylene.

The first housing body 15 may be, for example, transparent. FIG. 2 is a view illustrating a state in which the electrode body 14 can be seen through the first housing body 15 by using the transparent first housing body 15 in the cell 10.

The negative electrode 11 may have an exposed portion 11e exposed from the first housing body 15. The positive electrode 12 may have an exposed portion 12e exposed from the first housing body 15. The connection terminals 21 and 22 may be electrically connected to the exposed portions 11e and 12e, respectively, by ultrasonic welding, laser welding, or resistance welding, for example. Details of the negative electrode 11 and the positive electrode 12 will be described later.

The secondary battery 1 may have a configuration in which the cell 10 including the negative electrode 11 and the positive electrode 12 housed in the first housing body 15 is further housed in the second housing body 50. With this configuration, the electrode bodies 14 are doubly housed, so that the stability of the secondary battery 1 can be enhanced. The second housing body 50 may be housed in another housing body. However, the secondary battery 1 may include the negative electrode 11 and the positive electrode 12, and may be housed in at least one housing body.

In a first embodiment, the secondary battery 1 has a configuration in which a plurality of cells 10 are layered, for example, a configuration in which ten layers of the cells 10 are layered. However, the secondary battery 1 according to the present disclosure may include a plurality of layers different from the ten layers of the cells 10 or may include only one layer of the cell 10. When the secondary battery 1 includes a plurality of layers of the cells 10, the cells 10 may be layered. In plan view of the secondary battery 1 illustrated in FIG. 1, a portion other than the connection terminals 21 and 22 may have a substantially rectangular shape or may have a different shape. In plan view of the cell 10 illustrated in FIG. 2, a portion other than the exposed portions 11e and 12e may have a substantially rectangular shape or may have a different shape.

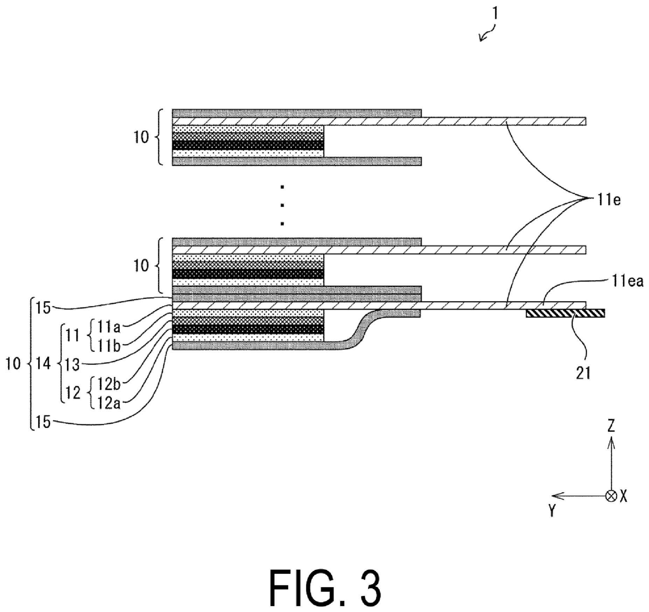

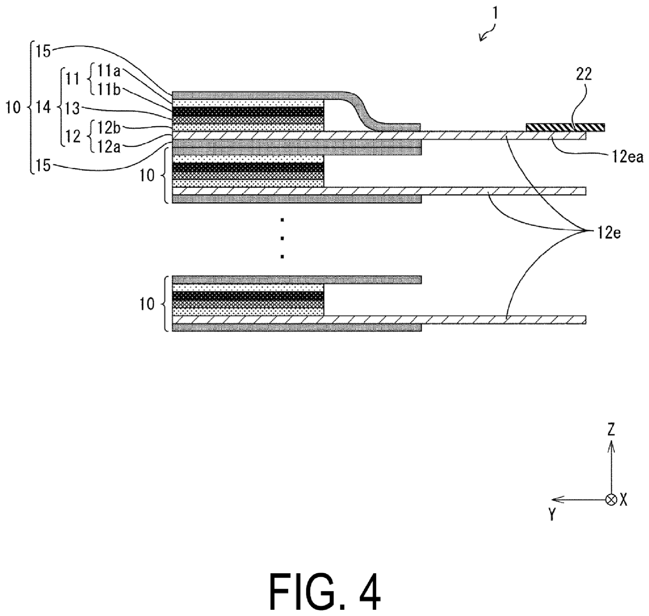

FIG. 3 is an exploded model view of a cross section taken along line III-III of FIG. 1. FIG. 4 is an exploded model view of a cross section taken along line IV-IV of FIG. 1. For the sake of simplicity, FIGs. 3 and 4 do not illustrate the second housing body 50. FIGs. 3 and 4 mainly illustrate the positional relationship of each component. Therefore, the relationship between the thicknesses of the components is not necessarily as illustrated in FIGs. 3 and 4.

As illustrated in FIGs. 3 and 4, the negative electrode 11 may have an electrode conductor 11a and a negative electrode active material layer 11b. The positive electrode 12 may have an electrode conductor 12a and a positive electrode active material layer 12b.

The electrode conductor 11a may be, for example, a copper foil. The electrode conductor 11a may have a thickness from 5 µm to 25 µm; for example, a thickness of 10 µm. The electrode conductor 12a may be, for example, an aluminum foil. The electrode conductor 12a may have a thickness from 5 µm to 25 µm; for example, a thickness of 10 µm.

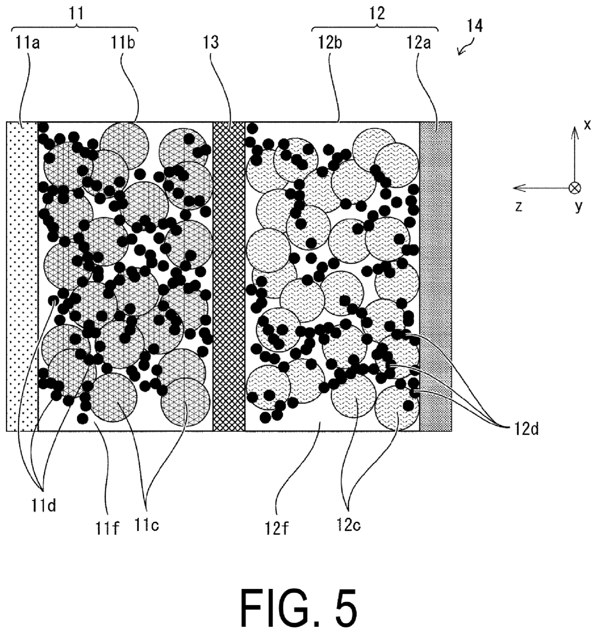

FIG. 5 is a cross-sectional view illustrating a specific structure of the electrode body 14. The cross-sectional view illustrated in FIG. 5 is obtained immediately after the electrode body 14 is manufactured. As illustrated in FIG. 5, the negative electrode active material layer 11b may be a layer of a positive electrode material which is a mixture of a negative electrode active material 11c, a conductive additive 11d, and a first electrolytic solution 11f. The positive electrode active material layer 12b may be a layer of a negative electrode material which is a mixture of a positive electrode active material 12c, a conductive additive 12d, and a second electrolytic solution 12f. The negative electrode active material 11c may be, for example, graphite, silicon, or lithium titanate. The positive electrode active material 12c may be, for example, lithium cobalt oxide, lithium nickel oxide, lithium iron phosphate, or lithium manganese oxide. The conductive additives 11d and 12d may each be, for example, carbon black or acetylene black. However, the negative electrode active material 11c, the positive electrode active material 12c, and the conductive additives 11d and 12d are not limited thereto. The conductive additives 11d, 12d may be omitted in the following description.

The first electrolytic solution and the second electrolytic solution may be obtained by dissolving a Li salt and an additive in a solvent. Specific components and composition ratios of the first electrolytic solution and the second electrolytic solution will be described later.

The negative electrode material may have a so-called clay-like property in which the first electrolytic solution is mixed into a mixture including the negative electrode active material 11c and the conductive additive 11d. The positive electrode material may have a so-called clay-like property in which the second electrolytic solution is mixed into a mixture including the positive electrode active material 12c and the conductive additive 12d. The negative electrode 11 may be an electrode in which a negative electrode material is applied to the electrode conductor 11a. The positive electrode 12 may be an electrode in which a positive electrode material is applied to the electrode conductor 12a.

The electrode body 14 may further include a separator 13. The negative electrode 11, the positive electrode 12, and the separator 13 may have a positional relationship such that the negative electrode active material layer 11b and the positive electrode active material layer 12b are in contact with the separator 13. That is, the cell 10 may have a structure in which the negative electrode 11 and the positive electrode 12 are layered with the separator 13 disposed therebetween. The separator 13 may serve as an insulating member that insulates the negative electrode 11 and the positive electrode 12. As the separator 13, for example, a sheet-like nonwoven fabric or porous material may be used. Thus, the first electrolytic solution and the second electrolytic solution can permeate the separator 13.

Immediately after the electrode body 14 is manufactured, only the first electrolytic solution is present on the negative electrode 11 side with respect to the separator 13, and only the second electrolytic solution is present on the positive electrode 12 side with respect to the separator 13. However, the first electrolytic solution can permeate the separator 13 from the negative electrode 11 side and move to the positive electrode 12 side. The second electrolytic solution can permeate the separator 13 from the positive electrode 12 side and move to the negative electrode 11 side. Therefore, after the electrode body 14 is manufactured, an electrolytic solution in which the first electrolytic solution and the second electrolytic solution are mixed is present on both the negative electrode 11 side and the positive electrode 12 side with respect to the separator 13. After a sufficiently long time has elapsed after the electrode body 14 is manufactured, there is no difference in the composition ratio of the components of the electrolytic solution between the negative electrode 11 side and the positive electrode 12 side with respect to the separator 13. In the following description, an electrolytic solution in which the first electrolytic solution and the second electrolytic solution are mixed is referred to as a mixed electrolytic solution.

When a porous material is used as the separator 13, specifically, a porous film made of a thermoplastic resin having a melting point of about 80°C to 140°C may be used. As the thermoplastic resin, for example, a polyolefin-based polymer such as polypropylene or polyethylene, or polyethylene terephthalate may be used. As the separator 13, a porous film formed of a thermoplastic resin and coated with a porous ceramic layer may be used.

When a negative electrode material and a positive electrode material having a clay-like property are used, a binder need not be used between the negative electrode 11 and the separator and between the positive electrode 12 and the separator. The electrolytic solution is mixed into the negative electrode material and the positive electrode material before the negative electrode 11 and the positive electrode 12 are formed. Therefore, the performance of the negative electrode 11 and the positive electrode 12 can be improved. Since the electrolytic solution is mixed in the negative electrode material and the positive electrode material, the number of steps in forming the negative electrode 11 and the positive electrode 12 can be reduced as compared with the case of using the negative electrode material and the positive electrode material in which the electrolytic solution is not mixed. In the manufacturing step of the secondary battery, the step of injecting the electrolytic solution can be omitted. The negative electrode material and the positive electrode material can be applied to the electrode conductor more thickly than in the case of using the negative electrode material and the positive electrode material in which the electrolytic solution is not mixed. Therefore, in realizing a secondary battery with a predetermined amount of electricity storage, the number of electrode conductors and separators used can be smaller than when a negative electrode material and a positive electrode material not having a clay-like property are used. Therefore, the material cost can be reduced, and the energy density can be increased.

The negative electrode material and the positive electrode material need not have a clay-like property. In this case, the electrolytic solution need not be mixed into the negative electrode active material 11c and the positive electrode active material 12c. For example, the negative electrode material may be a negative electrode slurry containing a mixture of the negative electrode active material 11c and the conductive additive 11d, a binder, and a solvent. The negative electrode slurry may be applied to the electrode conductor 11a and dried to form the negative electrode active material layer 11b. The solvent of the negative electrode slurry may be, for example, water. The positive electrode material may be a positive electrode slurry containing a mixture of the positive electrode active material 12c and the conductive additive 12d, a binder, and a solvent. The positive electrode slurry may be applied to the electrode conductor 12a and dried to form the positive electrode active material layer 12b. The binder may be polyvinylidene fluoride (PVdF), polyethylene oxide (PEO), or the like. The solvent of the positive electrode slurry may be, for example, an organic solvent such as N-methyl-2-pyrrolidone (NMP). In this case, the inside of the cell 10 may be filled with an electrolytic solution, and the electrolytic solution may impregnate and be held in the separator 13.

### Manufacturing Method for Secondary Battery

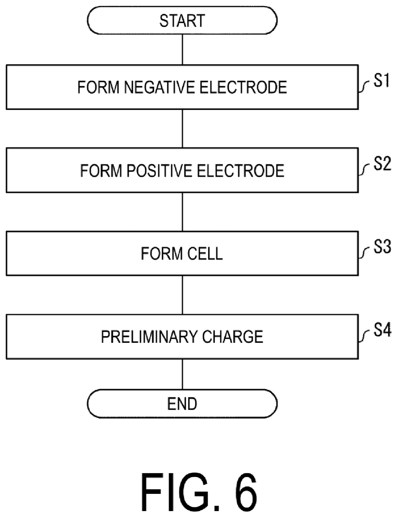

FIG. 6 is a flowchart illustrating a manufacturing method for the secondary battery 1 according to a first embodiment. The manufacturing method for the secondary battery 1 is as follows. First, the negative electrode 11 containing the negative electrode active material 11c and the first electrolytic solution is formed (S1: negative electrode forming step). Specifically, the clay-like negative electrode material described above may be applied to the electrode conductor 11a. Next, the positive electrode 12 containing the positive electrode active material 12c and the second electrolytic solution is formed (S2: positive electrode forming step). Specifically, the clay-like positive electrode material described above may be applied to the electrode conductor 12a.

The cell 10 in which the separator 13 is located between the negative electrode 11 and the positive electrode 12 formed is formed (S3: cell forming step). Specifically, the negative electrode 11 may be layered on one surface of the separator 13 such that the negative electrode active material layer 11b side is in contact with the separator 13. The positive electrode 12 may be layered on the other surface of the separator 13 such that the positive electrode active material layer 12b side is in contact with the separator 13. Thereafter, the cell 10 is preliminarily charged (S4: preliminary charging step). The secondary battery 1 can be manufactured by layering a plurality of cells 10 after the cells 10 have been preliminarily charged. Alternatively, the cells 10 that are layered in advance may be preliminarily charged.

In the preliminary charging step, the mixed electrolytic solution on the negative electrode 11 side of the separator 13 is decomposed to form a Solid Electrolyte Interface (SEI) film on the surface of the negative electrode active material 11c. In the preliminary charging step, in addition, the mixed electrolytic solution on the positive electrode 12 side of the separator 13 is decomposed to form a Cathode Electrolyte Interface (CEI) film on the surface of the positive electrode active material 12c. The SEI film and the CEI film are films that exhibit conductivity due to movement of Li⁺ and do not exhibit conductivity due to movement of electrons. In other words, the SEI film and the CEI film have a function of inserting and extracting Li⁺ into and from the negative electrode active material 11c and the positive electrode active material 12c.

When the mixed electrolytic solution is decomposed, Li⁺ decreases, and the performance of the secondary battery 1 deteriorates. The SEI film and the CEI film have a function of reducing further decomposition of the mixed electrolytic solution after the SEI film and the CEI film are formed. Therefore, the SEI film and the CEI film are necessary films for reducing the decomposition of the mixed electrolytic solution. However, if the SEI film and the CEI film are too thick, the electrical resistance becomes high, and thus the performance of the secondary battery 1 is adversely affected. Specific examples of the performance of the secondary battery 1 include a capacity retention rate and an area-specific impedance after charge and discharge are repeated a certain number of times.

In order to improve the performance of the secondary battery 1, a good SEI film may be formed on the negative electrode active material 11c, and a good CEI film may be formed on the positive electrode active material 12c. Specifically, it can be said that the SEI film or the CEI film is good when the thickness is equal to or less than 100 nm, or equal to or less than 50 nm, or further equal to or less than 30 nm, and variation in the thickness is small. A good SEI film or a good CEI film may further be stable, have no electronic conductivity, and have high Li-ion conductivity.

### Electrolytic Solution

As described above, the first electrolytic solution and the second electrolytic solution are obtained by dissolving a Li salt and an additive in a solvent. The composition ratio of components contained in the first electrolytic solution in the negative electrode forming step and the composition ratio of components contained in the second electrolytic solution in the positive electrode forming step are different from each other.

As described above, after a sufficiently long time elapses after the cell 10 is manufactured, there is no difference in the composition ratio of the components of the mixed electrolytic solution between the negative electrode 11 side and the positive electrode 12 side with respect to the separator 13. However, before a sufficiently long time elapses after the cell 10 is manufactured, there is a difference in the composition ratio of the components of the mixed electrolytic solution between the negative electrode 11 side and the positive electrode 12 side. The preliminary charging step is performed before a sufficient time elapses after the cell 10 is manufactured. Therefore, in the preliminary charging step, preliminary charging is performed in a state in which there is a difference in the composition ratio of the components of the mixed electrolytic solution between the negative electrode 11 side and the positive electrode 12 side.

In the electrolytic solution, components contributing to formation of a good SEI film on the surface of the negative electrode active material 11c and components contributing to formation of a good CEI film on the surface of the positive electrode active material 12c are different from each other. In a secondary battery including a solid electrolyte membrane, ion species contained in an electrolytic solution pass through the solid electrolyte membrane, but organic solvent molecules do not pass through the solid electrolyte membrane. Therefore, as disclosed in Patent Document 1 and the like, there are known secondary batteries in which the composition ratio of components of an electrolytic solution is different between a negative electrode side and a positive electrode side. On the other hand, in a secondary battery including a porous separator, to date, a single electrolytic solution has been used on both the negative electrode side and the positive electrode side, since the electrolytic solution is permeable. Therefore, in the known secondary battery including the porous separator, one or both of the SEI formed on the surface of the negative electrode active material and the CEI formed on the surface of the positive electrode active material are not good, and the performance of the secondary battery deteriorates.

The inventors of the present disclosure have conducted intensive research, and, as a result, have made the following findings. That is, the SEI film and the CEI film formed in a state in which a difference in the composition ratio of the components contained in the mixed electrolytic solution between the negative electrode 11 side and the positive electrode 12 side affects the performance of the secondary battery 1 even after there is no difference in the composition ratio of the components contained in the mixed electrolytic solution between the negative electrode 11 side and the positive electrode 12 side. Based on the findings, the inventors of the present disclosure have completed the manufacturing method for the secondary battery 1 according to the present disclosure in which the composition ratio of the components contained in the first electrolytic solution and the composition ratio of the components contained in the second electrolytic solution are made different from each other to form a good SEI film and a good CEI film. According to the manufacturing method, the performance of the secondary battery 1 can be improved by using a separator such as a porous separator having a low electrical resistivity instead of a separator formed of a solid material having a high electrical resistivity.

There are components of the electrolytic solution that do not favorably affect the performance of the secondary battery 1 or adversely affect the performance of the secondary battery 1 at the time of formation of the SEI film and the CEI film, but favorably affect the performance of the secondary battery 1 after formation of the SEI film and the CEI film. The performance of the secondary battery 1 can also be improved by making the composition ratio of such components different between the first electrolytic solution and the second electrolytic solution.

### Solvent

The first electrolytic solution contains, as a solvent, a first solvent that forms a good SEI film on the surface of the negative electrode active material 11c in the preliminary charging step. The volume% concentration of the first solvent contained in the first electrolytic solution may be higher than the volume% concentration of the first solvent contained in the second electrolytic solution. In other words, the second electrolytic solution may contain the first solvent at a volume% concentration lower than the volume% concentration of the first solvent contained in the first electrolytic solution. Alternatively, the second electrolytic solution need not contain the first solvent.

The first solvent may be ethylene carbonate. The higher the vol% concentration of ethylene carbonate contained in the mixed electrolytic solution on the negative electrode 11 side is in the preliminary charging step, the better the SEI film formed on the surface of the negative electrode active material 11c is. Therefore, a good SEI film can be formed on the surface of the negative electrode active material 11c by making the vol% concentration of ethylene carbonate contained in the first electrolytic solution higher than the vol% concentration of ethylene carbonate contained in the second electrolytic solution.

The second electrolytic solution may contain, as a solvent, a second solvent that causes a disadvantage when present on the negative electrode 11 side in the preliminary charging step. An example of the second solvent is propylene carbonate, γ-butyrolactone. The volume% concentration of the second solvent contained in the second electrolytic solution may be higher than the volume% concentration of the second solvent contained in the first electrolytic solution. In other words, the first electrolytic solution may contain the second solvent at a volume% concentration lower than the volume% concentration of the second solvent contained in the second electrolytic solution. Alternatively, the first electrolytic solution need not contain the second solvent.

Propylene carbonate has a disadvantage that a good SEI film is not formed on the surface of the negative electrode active material 11c in the preliminary charging step. γ-butyrolactone has a disadvantage that a film having a high electrical resistivity is formed on the surface of the negative electrode active material 11c in the preliminary charging step. However, after the formation of the SEI film, the above-described inconvenience caused by the presence of propylene carbonate and γ-butyrolactone on the negative electrode 11 side is smaller than that before the formation of the SEI film. On the other hand, propylene carbonate and γ-butyrolactone have lower freezing points than ethylene carbonate, and therefore have a favorable effect on the performance of the secondary battery 1 in a low-temperature environment.

By making the volume% concentration of the second solvent contained in the second electrolytic solution higher than the volume% concentration of the second solvent contained in the first electrolytic solution, the second solvent moves from the positive electrode 12 side to the negative electrode 11 side over time after the preliminary charging step. Accordingly, after the formation of the SEI film, the concentration of the second solvent on the negative electrode 11 side increases, and the performance of the secondary battery 1 in a low-temperature environment is improved.

The second solvent may contain a nitrile-sulfone-based solvent in addition to propylene carbonate or γ-butyrolactone. These solvents have high resistance to oxidation and low resistance to reduction. Therefore, in the preliminary charging step, these solvents are preferably contained in a larger amount in the vicinity of the surface of the positive electrode active material 12c than in the vicinity of the surface of the negative electrode active material 11c.

### Additive

The first electrolytic solution and the second electrolytic solution may contain an additive. The composition of the additive contained in the first electrolytic solution and the composition of the additive contained in the second electrolytic solution may be different from each other.

The additives contained in the first electrolytic solution and the second electrolytic solution contain a first additive that forms a good SEI film on the surface of the negative electrode active material 11c in the preliminary charging step. The mass% concentration of the first additive contained in the first electrolytic solution may be higher than the mass% concentration of the first additive contained in the second electrolytic solution. In other words, the second electrolytic solution may contain the first additive at a mass% concentration lower than the mass% concentration of the first additive contained in the first electrolytic solution. Alternatively, the second electrolytic solution need not contain the first additive.

The first additive may contain, for example, one or more selected from the group consisting of vinylene carbonate; fluoroethylene carbonate; succinic anhydride; maleic anhydride; 1,3-propane sultone; ethylene sulfate; ethylene sulfite; lithium bis(oxalato)borate; and lithium difluoro(oxalato)borate. Vinylene carbonate; fluoroethylene carbonate; maleic anhydride; 1,3-propane sultone; ethylene sulfate; ethylene sulfite; lithium bis(oxalato)borate; and lithium difluoro(oxalato)borate are reduced at a potential lower than the solvent of the first electrolytic solution. By using such additives as the first additive, a good SEI film can be formed on the surface of the negative electrode active material 11c.

The first electrolytic solution may contain, as the first additive, for example, methyl benzoate, succinic anhydride, succinimide, dialkyl pyrocarbonate, or the like in a larger amount than the second electrolytic solution. These additives are not reduced per se, but react with an intermediate or a product obtained by reducing the solvent to form a good SEI film on the surface of the negative electrode active material 11c.

The additives contained in the first electrolytic solution and the second electrolytic solution contain a second additive that forms a good CEI film on the surface of the positive electrode active material 12c in the preliminary charging step. The mass% concentration of the second additive contained in the second electrolytic solution may be higher than the mass% concentration of the second additive contained in the first electrolytic solution. In other words, the first electrolytic solution may contain the second additive at a mass% concentration lower than the mass% concentration of the second additive contained in the second electrolytic solution. Alternatively, the first electrolytic solution need not contain the second additive.

The second additive may contain, for example, one or more selected from the group consisting of vinylene carbonate; fluoroethylene carbonate; ethylene sulfate; adiponitrile; biphenyl; and lithium difluorophosphate (LiPO₂F₂). For example, vinylene carbonate and biphenyl are oxidatively polymerized on the surface of the positive electrode active material 12c to form a CEI film. Fluoroethylene carbonate and lithium difluorophosphate (LiPO₂F₂) form a stable CEI film such as LiF or Li₃PO₄ by oxidative decomposition. In a dinitrile compound such as adiponitrile, functional groups are coordinated to the surface of the positive electrode active material 12c to form a CEI film blocking active sites on the surface of the positive electrode active material 12c. Ethylene sulfate is adsorbed on the surface of the positive electrode active material 12c to form a CEI film that deactivates active sites of the positive electrode active material 12c, thereby reducing the generation of CO₂ and making it difficult for an increase in interface resistance to occur. By using such additives as the second additive, a good CEI film can be formed on the surface of the positive electrode active material 12c.

Fluoroethylene carbonate and ethylene sulfate can function as both of the first additive and the second additive depending on the materials of the negative electrode active material 11c and the positive electrode active material 12c. Thus, fluoroethylene carbonate and ethylene sulfate are mentioned for both the first additive and the second additive.

### Li Salt

The first electrolytic solution and the second electrolytic solution may contain a Li salt. The composition of the Li salt contained in the first electrolytic solution and the composition of the Li salt contained in the second electrolytic solution may be different from each other.

The first electrolytic solution may contain a first Li salt that generates hydrofluoric acid (HF) by hydrolysis. The molarity of the first Li salt contained in the first electrolytic solution may be higher than the molarity of the first Li salt contained in the second electrolytic solution. In other words, the second electrolytic solution may contain the first Li salt at a molarity lower than the molarity of the first Li salt contained in the first electrolytic solution. Alternatively, the second electrolytic solution need not contain the first Li salt. The first Li salt may contain one or more selected from the group consisting of LiPF₆ and LiBF₄.

HF generated by hydrolysis of the first Li salt contributes to formation of a good SEI film on the surface of the negative electrode active material 11c in the preliminary charging step. On the other hand, HF promotes the elution of transition metals from the positive electrode active material 12c, thereby deteriorating the performance of the secondary battery 1. When a large amount of the first Li salt is contained in the first electrolytic solution, a good SEI film can be formed on the surface of the negative electrode active material 11c.

When the electrode conductor 12a is aluminum, HF forms a passive film of fluoride (AlF₃) on the electrode conductor 12a in the preliminary charging step, thereby reducing corrosion of the electrode conductor 12a. Therefore, when the electrode conductor 12a is aluminum, the second electrolytic solution may contain a small amount of the first Li salt. Specifically, the second electrolytic solution may contain the first Li salt in a range of 1 mol/L or less.

The first electrolytic solution may further contain one or more selected from the group consisting of LiFSI and LiTFSI. The molarity of LiFSI or LiTFSI contained in the first electrolytic solution may be higher than the molarity of LiFSI or LiTFSI contained in the second electrolytic solution. In other words, the second electrolytic solution may contain LiFSI and LiTFSI at a molarity lower than the molarity of LiFSI and LiTFSI contained in the first electrolytic solution. Alternatively, the second electrolytic solution need not contain LiFSI and LiTFSI.

LiFSI and LiTFSI form a film derived from FSI on the surface of the negative electrode active material 11c. The film derived from FSI improves the cycle characteristics of the secondary battery 1 and further increases the coulombic efficiency in the initial charge and discharge (for example, see Journal of Power Sources 375 (2018) 43-52). Therefore, the deterioration of the performance of the secondary battery 1 can be reduced by increasing the molarity of LiFSI or LiTFSI contained in the first electrolytic solution.

LiFSI and LiTFSI corrode aluminum. However, as described above, when the electrode conductor 12a is aluminum and the second electrolytic solution contains a small amount of the first Li salt, a passive film is formed on the electrode conductor 12a. The passive film also reduces the electrode conductor 12a by LiFSI and LiTFSI. Therefore, in this case, LiFSI or LiTFSI contained in the first electrolytic solution is present in a large amount on the negative electrode 11 side in the preliminary charging step, and may move to the positive electrode 12 side over time.

### Examples

The performances of the secondary battery 1 manufactured by the manufacturing method according to the present embodiment and a secondary battery manufactured by a manufacturing method according to a comparative example will be described below.

Table 1 is a table showing composition ratios of five kinds of components contained in the first electrolytic solution and the second electrolytic solution for each of the manufacturing method according to the present embodiment and the manufacturing method according to the comparative example. In Table 1, LiPF₆ (first Li salt) is a Li salt. EC (ethylene carbonate; first solvent), PC (propylene carbonate; second solvent), and GBL (γ-butyrolactone; second solvent) are solvents. VC (vinylene carbonate; first additive) is an additive.

**[Table 1]**

| | SECOND ELECTROLYTIC SOLUTION | | | | | FIRST ELECTROLYTIC SOLUTION | | | | |
|---|---|---|---|---|---|---|---|---|---|---|
| | LiPF₆ (M) | EC (vol%) | PC (vol%) | GBL (vol%) | VC (wt%) | LiPF₆ (M) | EC (vol%) | PC (vol%) | GBL (vol%) | VC (wt%) |
| COMPARATIVE EXAMPLE | 0.9 | 20 | 20 | 60 | 2.8 | 0.9 | 20 | 20 | 60 | 2.8 |
| EXAMPLE 1 | 0.9 | 20 | 20 | 60 | 0 | 0.9 | 20 | 20 | 60 | 5.6 |
| EXAMPLE 2 | 0.9 | 0 | 0 | 100 | 2.8 | 0.9 | 40 | 40 | 20 | 2. 8 |
| EXAMPLE 3 | 0.6 | 20 | 20 | 60 | 2.8 | 1.2 | 20 | 20 | 60 | 2. 8 |

In the comparative example, the composition ratio of the components contained in the first electrolytic solution and the composition ratio of the components contained in the second electrolytic solution were the same as each other. In Example 1, the mass% concentration of VC as the first additive in the first electrolytic solution was higher than the mass% concentration of VC in the second electrolytic solution. In Example 2, the volume% concentration of EC as the first solvent in the first electrolytic solution was higher than the volume% concentration of EC in the second electrolytic solution, and the volume% concentration of GBL as the second solvent in the second electrolytic solution was higher than the volume% concentration of GBL in the first electrolytic solution. In Example 3, the molarity of LiPF₆ as the first Li salt in the first electrolytic solution was higher than the molarity of LiPF₆ in the second electrolytic solution.

Table 2 is a table showing performances of two samples of the secondary batteries according to the examples and the comparative example shown in Table 1 after repeating a charge/discharge cycle 100 times in an environment of 45°C at a charge/discharge rate of 0.3 C. In Table 2, "Capacity retention" indicates capacity retention ratio. ASI denotes "area-specific impedance". N1 and N2 indicate the samples of the secondary batteries according to the examples and the comparative example.

**[Table 2]**

| | Capacity retention (%) | | ASI (Ω ·cm²) | |
|---|---|---|---|---|
| | N1 | N2 | N1 | N2 |
| COMPARATIVE EXAMPLE | 86. 1 | 87. 5 | 43. 6 | 41.5 |
| EXAMPLE 1 | 90. 6 | 91.0 | 39. 3 | 40. 4 |
| EXAMPLE 2 | 91.8 | 91. 7 | 40. 2 | 39. 5 |
| EXAMPLE 3 | 91. 1 | 91.2 | 39. 8 | 40. 3 |

As for the capacity retention ratio, a secondary battery having a larger value has higher performance than a secondary battery having a smaller value. As for the area-specific impedance, a secondary battery having a smaller value has higher performance than a secondary battery having a larger value. As shown in Table 2, the samples according to the examples exhibit higher performance than the samples according to the comparative examples having higher performance. Therefore, it can be said that the manufacturing method according to the examples was able to manufacture a secondary battery having higher performance than the manufacturing method according to the comparative examples.

In the manufacturing method according to the present embodiment, the molarity of LiPF₆ as the first Li salt is not limited to the value according to the present example. The molarity of LiPF₆ may be, for example, 0.3 mol/L or more and 3.0 mol/L or less in the first electrolytic solution, and may be 0 mol/L or more and 2.0 mol/L or less in the second electrolytic solution.

In the manufacturing method according to the present embodiment, the volume% concentration of ethylene carbonate as the first solvent is not limited to the value according to the present example. The volume% concentration of ethylene carbonate may be, for example, 20 volume% or more and 80 volume% or less in the first electrolytic solution, and may be 0 volume% or more and 50 volume% or less in the second electrolytic solution.

In the manufacturing method according to the present embodiment, the volume% concentration of propylene carbonate as the second solvent is not limited to the value according to the present example. The volume% concentration of propylene carbonate may be, for example, 0 volume% or more and 50 volume% or less in the first electrolytic solution, and may be 20 volume% or more and 80 volume% or less in the second electrolytic solution.

In the manufacturing method according to the present embodiment, the volume% concentration of γ-butyrolactone as the second solvent is not limited to the value according to the present example. The volume% concentration of γ-butyrolactone may be, for example, 0 volume% or more and 50 volume% or less in the first electrolytic solution, and may be 20 volume% or more and 80 volume% or less in the second electrolytic solution.

In the manufacturing method according to the present embodiment, the mass% concentration of vinylene carbonate as the first additive is not limited to the value according to the present example. The mass% concentration of vinylene carbonate may be, for example, 2 mass% or more and 10 mass% or less in the first electrolytic solution, and may be 0 mass% or more and 5 mass% or less in the second electrolytic solution.

As described above, according to the manufacturing method for the secondary battery of the present disclosure, the performance of the secondary battery can be improved. Therefore, the degradation of secondary batteries can be reduced and the amount of secondary batteries to be discarded can be reduced. Such an effect also contributes to achievement of, for example, the Goal 12 "Responsible Consumption and Production" of Sustainable Development Goals (SDGs) proposed by UN, or the like.

### Second Embodiment

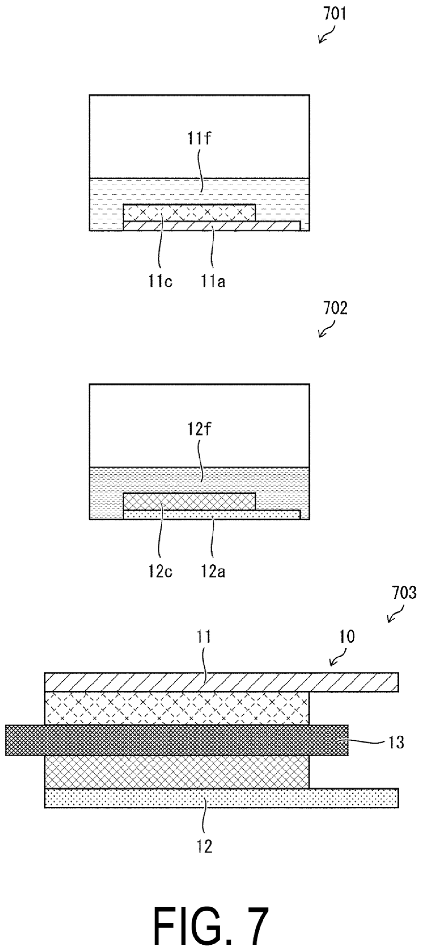

FIG. 7 is a schematic view illustrating a manufacturing method for a secondary battery 1 according to a second embodiment. In FIG. 7, reference numeral 701 is a schematic view illustrating a negative electrode forming step. Reference numeral 702 is a schematic view illustrating a positive electrode forming step. Reference numeral 703 is a schematic view illustrating a cell forming step.

As indicated by reference numeral 701, in the negative electrode forming step according to the second embodiment, the electrode conductor 11a and the negative electrode active material 11c applied to the electrode conductor 11a in advance are impregnated with the first electrolytic solution 11f in a vacuum to form the negative electrode 11. As indicated by reference numeral 702, in the positive electrode forming step according to the second embodiment, the electrode conductor 12a and the positive electrode active material 12c applied to the electrode conductor 12a in advance are impregnated with the second electrolytic solution 12f in a vacuum to form the positive electrode 12.

In the cell forming step according to the second embodiment, the excess first electrolytic solution is removed from the surface of the negative electrode 11 formed as described above, and the excess second electrolytic solution is removed from the surface of the positive electrode 12 formed as described above. In this state, as indicated by reference numeral 703, the cell 10 in which the separator 13 is located between the negative electrode 11 and the positive electrode 12 is formed. After the cell 10 is formed, preliminary charging is performed as described in the manufacturing method according to the first embodiment.

Also, in the manufacturing method according to the second embodiment, the composition ratio of the components contained in the first electrolytic solution can be made different from the composition ratio of the components contained in the second electrolytic solution. Therefore, the manufacturing method according to the second embodiment also achieves the same effect as the manufacturing method according to the first embodiment.

### Embodiment 3

In the manufacturing methods according to the first and second embodiments, the negative electrode 11 contains the first electrolytic solution and the positive electrode 12 contains the second electrolytic solution at the time when the cell 10 is formed. However, after a cell is formed in which the negative electrode does not contain the first electrolytic solution and the positive electrode does not contain the second electrolytic solution, the first electrolytic solution may be injected into the negative electrode and the second electrolytic solution may be injected into the positive electrode.

A manufacturing method according to a third embodiment will be described below. First, a negative electrode containing the negative electrode active material 11c and not containing the first electrolytic solution is formed. A positive electrode containing the positive electrode active material 12c and not containing the second electrolytic solution is formed. A cell in which a separator permeable to the first electrolytic solution and the second electrolytic solution is located between the negative electrode and the positive electrode is formed (cell forming step).

A first electrolytic solution is injected into the negative electrode of the formed cell (first electrolytic solution injection step), and a second electrolytic solution is further injected into the positive electrode (second electrolytic solution injection step). The first electrolytic solution injection step and the second electrolytic solution injection step may be performed in this order, may be performed in a reverse order, or may be performed simultaneously. Preliminary charging is performed on the cell after the execution of the first electrolytic solution injection step and the second electrolytic solution injection step (preliminary charging step).

The invention according to the present disclosure has been described above based on the drawings and examples. However, the invention according to the present disclosure is not limited to each embodiment described above. That is, the embodiments of the invention according to the present disclosure can be modified in various ways within the scope illustrated in the present disclosure, and embodiments obtained by appropriately combining the technical means disclosed in different embodiments are also included in the technical scope of the invention according to the present disclosure. In other words, note that a person skilled in the art can easily make different variations or modifications based on the present disclosure. Note that these variations or modifications are within the scope of the present disclosure.

### REFERENCE SIGNS

1 Secondary battery
10 Cell
11 Negative electrode
11c Negative electrode active material
12 Positive electrode
12c Positive electrode active material
13 Separator

## Claims

1. A manufacturing method for a secondary battery, comprising:
forming a negative electrode containing a negative electrode active material and a first electrolytic solution;
forming a positive electrode containing a positive electrode active material and a second electrolytic solution;
forming a cell in which a separator permeable to the first electrolytic solution and the second electrolytic solution is located between the negative electrode and the positive electrode; and
performing preliminary charging on the cell, wherein
a composition ratio of components contained in the first electrolytic solution and a composition ratio of components contained in the second electrolytic solution are different from each other.

2. A manufacturing method for a secondary battery, comprising:
forming a cell in which a separator permeable to a first electrolytic solution and a second electrolytic solution is located between a negative electrode containing a negative electrode active material and a positive electrode containing a positive electrode active material;
injecting the first electrolytic solution into the negative electrode;
injecting the second electrolytic solution into the positive electrode; and
performing preliminary charging on the cell, wherein
a composition ratio of components contained in the first electrolytic solution and a composition ratio of components contained in the second electrolytic solution are different from each other.

3. The manufacturing method for a secondary battery according to claim 1 or 2, wherein:
the first electrolytic solution contains, as a solvent, a first solvent that forms a good SEI film on the negative electrode active material in the preliminary charging step; and
a volume% concentration of the first solvent contained in the first electrolytic solution is higher than a volume% concentration of the first solvent contained in the second electrolytic solution.

4. The manufacturing method for a secondary battery according to claim 3, wherein
the first solvent is ethylene carbonate.

5. The manufacturing method for a secondary battery according to any one of claims 1 to 4, wherein:
the first electrolytic solution and the second electrolytic solution contain an additive; and
a composition of the additive contained in the first electrolytic solution and a composition of the additive contained in the second electrolytic solution are different from each other.

6. The manufacturing method for a secondary battery according to claim 5, wherein:
the additive contains a first additive that is reduced at a baser potential than a solvent of the first electrolytic solution in the preliminary charging; and
a mass% concentration of the first additive contained in the first electrolytic solution is higher than a mass% concentration of the first additive contained in the second electrolytic solution.

7. The manufacturing method for a secondary battery according to claim 6, wherein:
the first additive contains one or more selected from the group consisting of vinylene carbonate; fluoroethylene carbonate; maleic anhydride; 1,3-propane sultone; ethylene sulfate; ethylene sulfite; lithium bis(oxalato)borate; and lithium difluoro(oxalato)borate.

8. The manufacturing method for a secondary battery according to claim 5, wherein:
the additive contains a second additive that forms a good CEI film on the positive electrode active material in the preliminary charging step; and
a mass% concentration of the second additive contained in the second electrolytic solution is higher than a mass% concentration of the second additive contained in the first electrolytic solution.

9. The manufacturing method for a secondary battery according to claim 8, wherein
the second additive contains one or more selected from the group consisting of vinylene carbonate; fluoroethylene carbonate; ethylene sulfate; adiponitrile; biphenyl; and lithium difluorophosphate.

10. The manufacturing method for a secondary battery according to claim 1 or 2, wherein:
the first electrolytic solution contains a first Li salt that generates HF by hydrolysis;
a molarity of the first Li salt contained in the first electrolytic solution is higher than a molarity of the first Li salt contained in the second electrolytic solution; and
the first Li salt contains one or more selected from the group consisting of LiPF₆ and LiBF₄.
